(19) Europäisches Patentamt
European Patent Office
Office européen des brevets

(11) **EP 3 269 562 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(51) Int Cl.:
*B60C 9/00* *(2006.01)*      *B60C 9/20* *(2006.01)*
*D02G 3/48* *(2006.01)*      *B60C 9/22* *(2006.01)*
*D01F 6/60* *(2006.01)*

(21) Anmeldenummer: **17176520.9**

(22) Anmeldetag: **19.06.2017**

(54) **VERFAHREN ZUR HERSTELLUNG EINES BANDARTIGEN, FESTIGKEITSTRÄGERVERSTÄRKTEN KAUTSCHUKSTREIFENS**

METHOD FOR PRODUCING A STRIP-SHAPED RUBBER STRIP REINFORCED WITH A STRENGTHENING SUPPORT

PROCÉDÉ DE FABRICATION D'UNE BANDE DE CAOUTCHOUC RENFORCÉE D'UN SUPPORT EN FORME DE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2016 DE 102016212943**

(43) Veröffentlichungstag der Anmeldung:
**17.01.2018 Patentblatt 2018/03**

(73) Patentinhaber: **Continental Reifen Deutschland GmbH**
**30165 Hannover (DE)**

(72) Erfinder:
• **Reese, Wolfgang**
**31228 Peine (DE)**
• **Kramer, Thomas**
**32049 Herford (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**WO-A1-2015/137901      JP-A- H0 624 208**
**US-A- 5 931 211**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 269 562 B1

**Beschreibung**

Die Erfindung betrifft ein Verfahren zur Herstellung eines bandartigen, festigkeitsträgerverstärkten Kautschukstreifens, welcher für ein Spulen von einer Gürtelbandagenlage eines Fahrzeugluftreifens geeignet ist, wobei der bandartige Kautschukstreifen maximal 15 parallel zueinander angeordnete textile Festigkeitsträger pro cm aufweist, welche parallel zur Längsachse des Kautschukstreifens angeordnet sind und innerhalb einer Ebene liegen und durch Extrusion vollständig mit Kautschuk ummantelt sind, wobei die Festigkeitsträger zur Ummantelung mit Kautschukmaterial durch eine Lochschablone geführt werden, bei welcher zwei unmittelbar benachbarte Löcher einen Mindestabstand von 0,30 mm aufweisen und wobei man textile Festigkeitsträger verwendet, welche aus wenigstens zwei Garnen verdrehte Corde aus Polyamid 6.6 sind. Die Erfindung betrifft ferner die Verwendung eines mittels des vorgenannten Verfahrens hergestellten Kautschukstreifens.

Das vorgenannte Verfahren ist hinreichend bekannt und wird auf einer Vorrichtung ausgeführt, welche in der Fachwelt unter der Bezeichnung "Cap Strip Line" bekannt ist.

Die Festigkeitsträger für die Gürtelbandage von Reifen werden als gummierte bandartige Streifen hergestellt und auf den Reifenrohling gespult. Die Gürtelbandage wird auch als Cap Ply bezeichnet.

Die Gürtelbandage dient bei Fahrzeugluftreifen und insbesondere beim Hochgeschwindigkeitseinsatz dazu, eine Erhebung des Reifens durch die im Fahrbetrieb auftretenden Fliehkräfte zu verhindern. Sie ist bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Laufstreifen und einen Gürtel, zwischen Gürtel und Laufstreifen angeordnet. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger (= 0° bis 5° in Bezug auf die Reifenumfangsrichtung) in Form von Corden, die in eine Kautschukmischung eingebettet sind. Die Gürtelbandage wird bei der Reifenherstellung üblicherweise entweder in Form von Lagen, Streifen oder Einzelfestigkeitsträgern mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem beispielsweise eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Bei der Bombage und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn dieser Rohling auf einer flachen Trommel gewickelt wird. Somit soll der Festigkeitsträger, welcher in der Gürtelbandage eingesetzt ist, vorteilhafterweise diese Erhebung erlauben, also anfangs mit geringerem Kraftaufwand gedehnt werden können, jedoch nach dieser Anfangsdehnung bis 4% für die Hochgeschwindigkeitstauglichkeit mit nur höherem Kraftaufwand gedehnt werden können. In einem Kraft-Dehnungsdiagramm soll der Festigkeitsträger demnach bis zu einer Dehnung von 4% einen flacheren Verlauf und anschließend einen steileren Verlauf aufweisen.

In Bezug auf Festigkeitsträger aus Polyamid 6.6 ist aus der WO 2014182265 A1 ein Fahrzeugluftreifen bekannt, welcher in der Gürtelbandage Festigkeitsträger aus Polyamid 6.6 aufweist.

Aus der US 3,343,363 A sind getwistete Polyamid 6.6 -Filamente, -Garne und -Corde als Festigkeitsträger als Verstärkungsmaterial für Reifen bekannt, welche einen Anfangsmodul zwischen 25 und 60 g/d und eine feinheitsbezogene Festigkeit (Tenacity) größer als 7.0 g/d bei Raumtemperatur aufweisen. Die Werte des Anfangsmoduls sind ermittelt nach ASTM A1380-61T.

Aus der US 3,849,976 A sind Polyamid 6.6 -Corde mit zwei oder mehr Multifilamentgarnen mit einem $L_5$-Modul größer als 60 g/d als Verstärkungsmaterial für Reifen bekannt, welche durch Verstreckung unter hohen Spannungen bei hohen Temperaturen erhalten sind.

Aus der US 4,284,117 A sind verdrehte Nylon-, Polyester-, Rayon- und Aramidgarne als Festigkeitsträger der Gürtelbandage von Fahrzeugluftreifen bekannt.

Die US 5,115,853 A offenbart Nylon-Corde der Konstruktion 420 d x 2 (470 dtex x 2) mit einer Cordverdrehung, welche geringer als 276 t/m ist und welche in der Gürtelbandage von Fahrzeugluftreifen verwendet sind.

Aus dem Stand der Technik ist es bekannt, den Anfangsmodul oder LASE (Load At Specified Elongation) von Polyamid-Corden zu erhöhen, indem diese bei vergleichsweise hohen Temperaturen heißverstreckt werden. Um die hierdurch erhaltenen Eigenschaften auch nach der Relaxation (konditioniert mit freien geschnittenen Enden unter Laborbedingungen) zu erhalten, war es bisher notwendig, die PA 6.6 -Garne oder -Corde Temperaturbedingungen höher als 250°C auszusetzen. Nachteilig ist jedoch, dass die Corde unter den vorstehenden Bedingungen rigide/spröde werden und daher schneller bei Beanspruchung auf Druck- und Biegewechsel ermüden.

Ein Cord besteht im Rahmen dieser Anmeldung aus wenigstens 2 miteinander verdrehten Multifilamentgarnen.

Die gummierten bandartigen Streifen (Bänder) werden, wie bereits erwähnt, entweder durch kalandrieren eines Gewebes und anschließendes Schneiden in entsprechend breite Streifen/Bänder hergestellt oder die bandartigen Streifen werden mittels einer sogenannten Cap Strip Line extrudiert.

Nachteilig bei aus einem kalandrierten Gewebe geschnittenen bandartigen Streifen ist es, dass beim Schneiden der bandartigen Streifen einzelne Corde beschädigt oder durchtrennt werden können. Weiterhin hat eine Kalanderrolle nur eine Länge von ca. 150m, wodurch die Länge der bandartigen Streifen begrenzt ist und es viele Zusammensetzungen der Streifen auf dem Reifen zur Gürtelbandagenlage gibt.

Vorteil des Extrusionsprozesses mittels einer sogenannten Cap Strip Line oder einer vergleichbaren Vorrichtung ist es, dass in den bandartigen Streifen keine durch Anschneiden beschädigten Corde vorliegen und dass es aufgrund der großen Spulenlänge von einigen km keine bis nur wenige Zusammensetzungen der Streifen auf dem Reifen zur Gürtelbandagenlage gibt. Jedoch ist bei dem Extrusionsprozess der Mindestabstand der Corde innerhalb der bandartigen Streifen beschränkt. Vorrichtungsbedingt beträgt der Mindestabstand (=lichter Abstand) zweier benachbarter Corde 0,30mm, da andernfalls die Corde nicht innerhalb der Extrusionsschablone geführt werden können. Hierdurch ist es nicht möglich, Streifen mit einer sehr dichten Cordeinstellung herzustellen.

Es ist jedoch wünschenswert, dass die extrudierten Streifen trotz der herstellungsbedingten begrenzten Festigkeitsträgerdichte einen für die Reifenanwendung als Gürtelbandage geeigneten Modul aufweisen, welcher mit einem geeigneten Modul von in Streifen geschnittenem kalandrierten Gewebe ohne den Mindestabstand des Extrusionsverfahrens der Festigkeitsträger vergleichbar ist.

Daher ist es die Aufgabe der Erfindung, ein Verfahren zur Herstellung eines bandartigen, Polyamid 6.6-festigkeitsträgerverstärkten Kautschukstreifens bereitzustellen, mit welchem trotz des Mindestabstandes der Corde zueinander bandartige Streifen mit geeignetem Modul herstellbar sind.

Die Aufgabe wird gelöst, indem das Rohgarn aus Polyamid 6.6 eine feinheitsbezogene Festigkeit aufweist, welche bei einer Dehnung von 4% in einem Bereich von 1,35cN/dtex bis 1,60 cN/dtex liegt, indem der Cord eine feinheitsbezogene Festigkeit aufweist, welche bei einer Dehnung von 4% in einem Bereich von 1,2 cN/dtex bis 2 cN/dtex liegt und indem der Cord einen Heißschrumpf bei 177°C in einem Bereich von 4,0% - 7,0% aufweist, wobei die feinheitsbezogene Festigkeit nach ASTM D885-16 und der Heißschrumpf bei 177°C unter einer Vorspannung von 0,045 g/dtex mit zwei Minuten Expositionszeit ermittelt sind.

"Rohgarn" meint ein Multifilamentgarn, welches noch nicht heißverstreckt ist. "Cord" meint Festigkeitsträger mit Multifilamentgarnen, welche den Prozess der Heißverstreckung incl. Imprägnierung bereits durchlaufen haben.

Es ist ein Verfahren bereitgestellt, bei dem Corde aus Polyamid 6.6 eingesetzt werden, welche bei einer Dehnung von 4% einen höhen E-Modul als vergleichbare Corde aufweisen, welche aber ermüdungsbeständiger in Bezug auf Zug-, Druck- und Biegewechselbeanspruchungen sind. Hierdurch kann der prozeßbedingte größere lichte Abstand der Festigkeitsträger zueinander ausgeglichen werden und der durch das Verfahren erhaltende bandartige Streifen weist trotz geringerer Festigkeitsträgerdichte einen vergleichbaren Modul zu kalandrierten und geschnittenen Streifen auf.

Diese Eigenschaften der bandartigen Streifen eignen sich insbesondere für den Einsatz als Gürtelbandage eines Fahrzeugluftreifens, da die erforderliche Dehnung bis ca. 3% für die Reifenherstellung weiterhin erhalten ist, während bei höheren Dehnungen höhere Kräfte aufgebracht werden müssen, welches für den Hochgeschwindigkeitsbetrieb des Reifens vorteilhaft ist.

Die nachfolgenden Vergleichswerte der feinheitsbezogenen Festigkeit eines Festigkeitsträgers aus Polyamid 6.6 der Konstruktion 1400x2 bei 4% Dehnung zeigen den Vorteil einer höheren feinheitsbezogenen Festigkeit des Festigkeitsträgers (B), der mittels des erfindungsgemäßen Verfahrens zum bandartigen Streifen extrudiert wurde im Vergleich zu einem extrudierten Streifen mit einem Standard-Festigkeitsträger (A) des Standes der Technik:

Tab.1

| | | |
|---|---|---|
| A | 1400x2 | 29 N = 1.0 cN/dtex |
| B | 1400x2 | 35 N = 1.3 cN/dtex |

Überraschenderweise werden die Corde aus Polyamid 6.6, welche in dem erfindungsgemäßen Verfahren eingesetzt werden dadurch erhalten, dass das verwendete Rohgarn aus Polyamid 6.6 eine feinheitsbezogene Festigkeit aufweist, welche bei einer Dehnung von 4% in einem Bereich von 1,35 cN/dtex bis 1,60 cN/dtex liegt und dass dieses Rohgarn in einem Bereich größer als 5% und kleiner als 12% bei Temperaturen zwischen 230°C und 250°C verstreckt wird und auf geeignete Spulen mit einer Spannung zwischen 150g und 500g pro Festigkeitsträger aufgespult wird. Hierdurch bleiben die durch den Verstreckprozeß erzielten Eigenschaften auch bei dem auf die Spule aufgewickelten Festigkeitsträger erhalten, da dem Festigkeitsträger eine Relaxation nicht erlaubt ist und ohne die Relaxation, welche immer einen Modul-Verlust bedeutet, im Reifen eingesetzt werden können.

Die Kraft-Dehnungsdaten der Corde sind gemäß D885-16 bestimmt, nach der Konditionierung der Garne auf Spulen für 24 Stunden bei 24°C und einer relativen Luftfeuchtigkeit von 55%. Nach der Konditionierung sind die Corde innerhalb von 1 Minute getestet, nachdem sie von der Spule abgewickelt worden sind.

Diese Corde weisen eine feinheitsbezogene Festigkeit bei 4% Dehnung von 1,2 cN/dtex bis 2,0 cN/dtex und ein Heißschrumpf bei 177°C von 4% bis 7% auf. Die feinheitsbezogene Festigkeit bei 4% Dehnung von 1,2 cN/dtex bis 2,0 cN/dtex entspricht einem Modul von 30,6 g/dtex bis 51 g/dtex (34 g/d bis 56,7 g/d).

Die Modul-Werte sind folgendermaßen berechnet: feinheitsbezogene Festigkeit bei 4% Dehnung x 25, um die erforderliche feinheitsbezogene Festigkeit für 100% Dehnung zu erhalten.

Die feinheitsbezogene Festigkeit bei 4% Dehnung [cN/dtex] ist: Zugkraft bei 4% Dehnung [cN] / Feinheit [dtex], wobei die Feinheit des gesamten Festigkeitsträgers herangezogen ist.

Die Feinheit des gesamten Festigkeitsträgers errechnet sich aus der Summe der Feinheiten der Multifilamentgarne des Cordes. Beispiel: Ein Cord der Konstruktion 700dtex x 2 weist eine Feinheit des gesamten Festigkeitsträgers von 1400 dtex auf.

Der Heißschrumpf von Garnen bzw. Corden ist ermittelt mit einem Schrumpfmessgerät vom Hersteller Testrite unter einer Vorspannung von 0,045 g/dtex bei 177°C mit 2 Minuten Expositionszeit.

Zweckmäßig ist es, wenn das Rohgarn aus Polyamid 6.6 eine feinheitsbezogene Festigkeit aufweist, welche bei einer Dehnung von 4% in einem Bereich von 1,35cN/dtex bis 1,50 cN/dtex liegt. Würden die Kräfte noch höher sein, könnten diese zu Problemen beim Einformen führen.

Zweckmäßig ist es, wenn der Cord eine Feinheit von 300 bis 4000 dtex aufweist. Dieser Feinheitsbereich stellt einen vorteilhaften Kompromiss bezüglich Festigkeit einerseits und Rollwiderstand bzw. Kosten andererseits dar. Wäre die Feinheit zu gering, d.h. das Multifilamentgarn zu dünn, wäre eine zu geringe Festigkeit erhalten. Wäre das Multifilamentgarn zu dick, wäre dieses nachteilig für den Rollwiderstand des Reifens und nachteilig bezüglich der Kosten.

Vorteilhaft ist es, wenn der Twistfaktor $\alpha$ des Cordes in einem Bereich von 100 bis 250, vorzugsweise in einem Bereich von 120 bis 180 liegt, wobei $\alpha$ = Twist [t/m]·(Feinheit [tex]/ 1000)$^{1/2}$. Der Twistfaktor ist ein Maß für die Endverdrehung pro Meter des Cordes, bezogen auf die Feinheit des Cordes. Der Twistfaktor gibt indirekt eine Aussage über den Helixwinkel der Filamente im Cord, d.h. die Auslenkung aus der Cordachse. Dieser Twistfaktor stellt einen vorteilhaften Kompromiss bezüglich Ermüdungsbeständigkeit und Festigkeit dar. Ein geringerer Twistfaktor wäre nachteilig in Bezug auf die Ermüdungbeständigkeit, ein höherer Twistfaktor würde eine geringere Festigkeit des Festigkeitsträgers bedeuten.

Zweckmäßig ist es, wenn der Cord die Konstruktion x2 oder x3 aufweist. Ein Cord aus 2 oder 3 Garnen weist eine bessere Ermüdungsbeständigkeit als ein verdrehtes Multifilamentgarn auf. Bei Konstruktionen höher als x3 nehmen die Twistkosten nachteilig stark zu, während andere Eigenschaften, wie beispielsweise die feinheitsbezogenen Festigkeit nachteilig abnehmen können.

In einer ersten besonders geeigneten Ausführung der Erfindung ist jeder Festigkeitsträger der Verstärkungslage ein Cord aus zwei miteinander verdrehten Multifilamentgarnen mit je einer Garnfeinheit von 1400 dtex. Der Cord weist somit die Konstruktion 1400x2 auf. Der Cord weist eine feinheitsbezogene Festigkeit auf, die bei einer Dehnung von 4% in einem Bereich von 1,3 cN/dtex bis 1,4 cN/dtex liegt. Die Corde sind vorzugsweise in einer Dichte von 90 epdm in dem Streifen angeordnet. Durch den im Vergleich zum Stand der Technik erhöhten Modul des PA6.6-Cordes kann dieser in einer geringeren Dichte in dem Streifen angeordnet sein, wodurch die Herstellung dieser Lage einfacher wird und ebenfalls ein Kostenvorteil aufgrund des verringerten Einsatzes an Festigkeitsträgern erreicht ist.

Die Abkürzung "epdm" steht für "ends per dm" und gibt die Dichte an, in welcher die Festigkeitsträger in einer Lage oder Streifen angeordnet sind.

In der vorangehenden Ausführung sind die Corde in einer Dichte von 90 epdm angeordnet. Dieses bedeutet, dass auf einer Breite von 1 dm 90 Corde angeordnet sind. Umgerechnet auf eine Streifenbreite von 10 mm sind entsprechend 9 Corde in dem Streifen angeordnet.

In einer zweiten besonders geeigneten Ausführung der Erfindung ist jeder Festigkeitsträger der Verstärkungslage ein Cord aus zwei miteinander verdrehten Multifilamentgarnen mit je einer Garnfeinheit von 470 dtex. Der Cord weist somit die Konstruktion 470x2 auf. Der Cord weist eine feinheitsbezogene Festigkeit auf, die bei einer Dehnung von 4% in einem Bereich von 1,6 cN/dtex bis 1,7 cN/dtex liegt. Die Corde sind vorzugsweise in einer Dichte von 90 bis 100 epdm in dem Streifen angeordnet. Durch den im Vergleich zum Stand der Technik erhöhten Modul des PA6.6-Cordes kann dieser in einer geringeren Dichte in dem Streifen angeordnet sein, wodurch die Herstellung dieser Lage einfacher wird und ebenfalls ein Kostenvorteil aufgrund des verringerten Einsatzes an Festigkeitsträgern erreicht ist.

In einer dritten besonders geeigneten Ausführung der Erfindung ist jeder Festigkeitsträger der Verstärkungslage ein Cord aus zwei miteinander verdrehten Multifilamentgarnen mit je einer Garnfeinheit von 350 dtex. Der Cord weist somit die Konstruktion 350x2 auf. Der Cord weist eine feinheitsbezogene Festigkeit auf, die bei einer Dehnung von 4% bei 1,9 cN/dtex liegt. Die Corde sind vorzugsweise in einer Dichte von 110 bis 130 epdm in dem Streifen angeordnet. Durch den im Vergleich zum Stand der Technik erhöhten Modul des PA6.6-Cordes kann dieser in einer geringeren Dichte in dem Streifen angeordnet sein, wodurch die Herstellung dieser Lage einfacher wird und ebenfalls ein Kostenvorteil aufgrund des verringerten Einsatzes an Festigkeitsträgern erreicht ist.

Der nach einer oder mehreren der voranstehend beschriebenen vorteilhaften Ausgestaltungen des Verfahrens hergestellten bandartigen, festigkeitsträgerverstärkten Kautschukstreifens sind besonders zur Spulung einer Gürtelbandage eines Fahrzeugluftreifens verwendbar.

Es wurden Reifentests mit einem PKW-Reifen der Dimension 225/45 R17 durchgeführt, wobei die Gürtelbandage aus 2 gespulten Verstärkungslagen besteht, wobei die bandartigen Streifen nach dem erfindungsgemäßen Verfahren hergestellt wurden. Es wurden baugleiche PKW-Reifen für diese Tests herangezogen, lediglich die Gürtelbandage variiert. Die erfindungsgemäßen Verstärkungslagen weisen Festigkeitsträgern aus Polyamid 6.6 der Konstruktion 1400x2 auf, welche in einer Dichte von 90 epdm in der Verstärkungslage angeordnet sind. Als Vergleich wurden Verstärkungslagen des Standes der Technik getestet, welche Festigkeitsträger aus Standard-Polyamid 6.6 der Konstruktion 1400x2 in einer Dichte von 110 epdm aufweisen.

Die nachfolgende Tabelle 2 zeigt die Ergebnisse dieser Tests:

Tab. 2

|  | Stand der Technik Verstärkungslage 1400x2, 110 epdm | Erfindung Verstärkungslage 1400x2, 90 epdm |
|---|---|---|
| Festigkeit bei 4% Dehnung | 319 N/cm | 315 N/cm |
| Rollwiderstand | 9.81 kg/t (=100%) | 9.68 kg/t (=101,3%) |

Es ist ersichtlich, dass die Festigkeit bei 4% Dehnung der erfindungsgemäßen Verstärkungslage trotz einer deutlich geringeren Dichte an Festigkeitsträgern etwa gleich hoch ist wie bei der Verstärkungslage des Standes der Technik. Ebenfalls ist ersichtlich, dass Vorteile hinsichtlich des Rollwiderstandes erzielt sind. Der Referenzreifen des Standes der Technik weist einen Rollwiderstand von 100% auf, während der Reifen mit der erfindungsgemäßen Verstärkungslage 101,3% erreicht hat. Höhere %-Werte stehen für einen geringeren Rollwiderstand.

**Patentansprüche**

1. Verfahren zur Herstellung eines bandartigen, festigkeitsträgerverstärkten Kautschukstreifens, welcher für ein Spulen von einer Gürtelbandagenlage eines Fahrzeugluftreifens geeignet ist, wobei der bandartige Kautschukstreifen maximal 15 parallel zueinander angeordnete textile Festigkeitsträger pro cm aufweist, welche innerhalb einer Ebene liegen und durch Extrusion vollständig mit Kautschuk ummantelt sind, wobei die Festigkeitsträger zur Ummantelung mit Kautschukmaterial durch eine Lochschablone geführt werden, bei der zwei unmittelbar benachbarte Löcher einen Mindestabstand von 0,30 mm aufweisen und wobei man textile Festigkeitsträger verwendet, welche aus wenigstens zwei Garnen verdrehte Corde aus Polyamid 6.6 sind,
   **dadurch gekennzeichnet, dass**
   dass das Rohgarn aus Polyamid 6.6 eine feinheitsbezogene Festigkeit aufweist, welche bei einer Dehnung von 4% in einem Bereich von 1,35cN/dtex bis 1,60 cN/dtex liegt,
   dass der Cord eine feinheitsbezogene Festigkeit aufweist, welche bei einer Dehnung von 4% in einem Bereich von 1,2 cN/dtex bis 2 cN/dtex liegt und dass der Cord einen Heißschrumpf bei 177°C in einem Bereich von 4,0% - 7,0% aufweist,
   wobei die feinheitsbezogene Festigkeit nach ASTM D885-16 und der Heißschrumpf bei 177°C unter einer Vorspannung von 0,045 g/dtex mit zwei Minuten Expositionszeit ermittelt sind.

2. Verfahren zur Herstellung eines bandartigen, festigkeitsträgerverstärkten Kautschukstreifens nach Anspruch 1, **dadurch gekennzeichnet, dass** der Cord eine Feinheit von 300 bis 4000 dtex aufweist.

3. Verfahren zur Herstellung eines bandartigen, festigkeitsträgerverstärkten Kautschukstreifens nach einem der vorangehenden Ansprüche, **dadurch gekennzeichnet, dass** der Twistfaktor $\alpha$ eines jeden Multifilamentgarnes oder des Cordes in einem Bereich von 100 bis 250, vorzugsweise in einem Bereich von 120 bis 180 liegt, wobei $\alpha$ = Twist [t/m]·(Feinheit [tex]/ 1000)$^{1/2}$.

4. Verfahren zur Herstellung eines bandartigen, festigkeitsträgerverstärkten Kautschukstreifens nach einem oder mehreren der vorangehenden Ansprüche, **dadurch gekennzeichnet, dass** das Rohgarn aus Polyamid 6.6 eine feinheitsbezogene Festigkeit aufweist, welche bei einer Dehnung von 4% in einem Bereich von 1,35cN/dtex bis 1,50 cN/dtex liegt.

**5.** Verfahren zur Herstellung eines bandartigen, festigkeitsträgerverstärkten Kautschukstreifens nach einem der vorangehenden Ansprüche, **dadurch gekennzeichnet, dass** das Multifilamentgarn einen Heißschrumpf bei 177°C in einem Bereich von 5,0% - 6,5% aufweist.

**6.** Verfahren zur Herstellung eines bandartigen, festigkeitsträgerverstärkten Kautschukstreifens nach einem der vorangehenden Ansprüche, **dadurch gekennzeichnet, dass** der Cord die Konstruktion x2 oder x3 aufweist.

**7.** Verfahren zur Herstellung eines bandartigen, festigkeitsträgerverstärkten Kautschukstreifens nach Anspruch 5, **dadurch gekennzeichnet, dass**, der Festigkeitsträger ein Cord aus zwei miteinander verdrehten Multifilamentgarnen mit je einer Garnfeinheit von 1400 dtex ist und somit die Konstruktion 1400x2 aufweist, dass der Cord eine feinheitsbezogene Festigkeit aufweist, die bei einer Dehnung von 4% in einem Bereich von 1,3 cN/dtex bis 1,4 cN/dtex liegt und dass die Corde vorzugsweise in einer Dichte von 80-120 epdm, besonders bevorzugt in einer Dichte von 90 epdm in dem Streifen angeordnet sind, wobei epdm für ends per dm steht.

**8.** Verfahren zur Herstellung eines bandartigen, festigkeitsträgerverstärkten Kautschukstreifens nach Anspruch 5, **dadurch gekennzeichnet, dass** der Festigkeitsträger ein Cord aus zwei miteinander verdrehten Multifilamentgarnen mit je einer Garnfeinheit von 470 dtex ist und somit die Konstruktion 470x2 aufweist, dass der Cord eine feinheitsbezogene Festigkeit aufweist, die bei einer Dehnung von 4% in einem Bereich von 1,6 cN/dtex bis 1,7 cN/dtex liegt und dass die Corde vorzugsweise in einer Dichte von 90 bis 170, besonders bevorzugt in einer Dichte von etwa 100 epdm in dem Streifen angeordnet sind, wobei epdm für ends per dm steht.

**9.** Verfahren zur Herstellung eines bandartigen, festigkeitsträgerverstärkten Kautschukstreifens nach Anspruch 5, **dadurch gekennzeichnet, dass** der Festigkeitsträger ein Cord aus zwei miteinander verdrehten Multifilamentgarnen mit je einer Garnfeinheit von 350 dtex ist und somit die Konstruktion 350x2 aufweist, dass der Cord eine feinheitsbezogene Festigkeit aufweist, die bei einer Dehnung von 4% bei 1,9 cN/dtex liegt und dass die Corde vorzugsweise in einer Dichte von 110 bis 200 epdm, besonders bevorzugt in einer Dichte von 110 bis 130 epdm in dem Streifen angeordnet sind, wobei epdm für ends per dm steht.

**10.** Verwendung eines nach einem Verfahren gemäß eines oder mehrerer der Ansprüche 1 bis 9 hergestellten bandartigen, festigkeitsträgerverstärkten Kautschukstreifens zur Spulung einer Gürtelbandage eines Fahrzeugluftreifens.

## Claims

**1.** Method for producing a band-like rubber strip strengthened with reinforcing elements, which is suitable for spooling a belt bandage ply of a pneumatic vehicle tyre, the band-like rubber strip having a maximum of 15 textile reinforcing elements arranged parallel to one another per cm, which lie within one plane and are completely encapsulated in rubber by extrusion, wherein, for encapsulating in rubber material, the reinforcing elements are passed through a hole template, in which two directly adjacent holes have a minimum spacing of 0.30 mm and wherein textile reinforcing elements that are cords of polyamide 6.6 twisted from at least two yarns are used,
**characterized in that**
the crude yarn of polyamide 6.6 has a tenacity which, at an elongation of 4%, lies in a range from 1.35 cN/dtex to 1.60 cN/dtex,
**in that** the cord has a tenacity which, at an elongation of 4%, lies in a range from 1.2 cN/dtex to 2 cN/dtex and
**in that** the cord has a heat shrinkage at 177°C in a range from 4.0% to 7.0%,
wherein the tenacity is determined in accordance with ASTM D885-16 and the heat shrinkage at 177°C is determined under a prestress of 0.045 g/dtex with an exposure time of two minutes.

**2.** Method for producing a band-like rubber strip strengthened with reinforcing elements according to Claim 1, **characterized in that** the cord has a fineness of 300 to 4000 dtex.

**3.** Method for producing a band-like rubber strip strengthened with reinforcing elements according to one of the preceding claims, **characterized in that** the twist factor $\alpha$ of each multifilament yarn or of the cord lies in a range from 100 to 250, preferably in a range from 120 to 180, where $\alpha$ = twist [t/m]· (fineness [tex]/1000)$^{1/2}$.

**4.** Method for producing a band-like rubber strip strengthened with reinforcing elements according to one or more of the preceding claims, **characterized in that** the crude yarn of polyamide 6.6 has a tenacity which, at an elongation of 4%, lies in a range from 1.35 cN/dtex to 1.50 cN/dtex.

**5.** Method for producing a band-like rubber strip strengthened with reinforcing elements according to one of the preceding claims, **characterized in that** the multifilament yarn has a heat shrinkage at 177°C in a range from 5.0% to 6.5%.

**6.** Method for producing a band-like rubber strip strengthened with reinforcing elements according to one of the preceding claims, **characterized in that** the cord has the construction ×2 or ×3.

**7.** Method for producing a band-like rubber strip strengthened with reinforcing elements according to Claim 5, **characterized in that** the reinforcing element is a cord comprising two twisted-together multifilament yarns each with a yarn fineness of 1400 dtex, and consequently has the construction 1400×2, **in that** the cord has a tenacity which, at an elongation of 4%, lies in a range from 1.3 cN/dtex to 1.4 cN/dtex and **in that** the cords are arranged in the strip preferably in a density of 80-120 epdm, particularly preferably in a density of 90 epdm, where epdm stands for ends per dm.

**8.** Method for producing a band-like rubber strip strengthened with reinforcing elements according to Claim 5, **characterized in that** the reinforcing element is a cord comprising two twisted-together multifilament yarns each with a yarn fineness of 470 dtex, and consequently has the construction 470×2, **in that** the cord has a tenacity which, at an elongation of 4%, lies in a range from 1.6 cN/dtex to 1.7 cN/dtex and **in that** the cords are arranged in the strip preferably in a density of 90 to 170, particularly preferably in a density of approximately 100 epdm, where epdm stands for ends per dm.

**9.** Method for producing a band-like rubber strip strengthened with reinforcing elements according to Claim 5, **characterized in that** the reinforcing element is a cord comprising two twisted-together multifilament yarns each with a yarn fineness of 350 dtex, and consequently has the construction 350×2, **in that** the cord has a tenacity which, at an elongation of 4%, lies at 1.9 cN/dtex and **in that** the cords are arranged in the strip preferably in a density of 110 to 200epdm, particularly preferably in a density of 110 to 130 epdm, where epdm stands for ends per dm.

**10.** Use of a band-like rubber strip strengthened with reinforcing elements produced by a method according to one or more of Claims 1 to 9 for the spooling of a belt bandage of a pneumatic vehicle tyre.

**Revendications**

**1.** Procédé de fabrication d'une bande de caoutchouc en forme de bande, renforcée par des éléments de résistance, qui convient pour un enroulement d'une couche de bande de ceinture d'un pneumatique de véhicule, dans lequel la bande de caoutchouc en forme de bande présente au maximum 15 éléments de résistance textiles par cm, disposés parallèlement l'un à l'autre, qui sont situés à l'intérieur d'un plan et qui sont entièrement enrobés de caoutchouc par extrusion, dans lequel les éléments de résistance sont guidés, pour l'enrobage avec le matériau de caoutchouc, à travers un gabarit perforé, dans lequel deux trous directement voisins présentent une distance minimale de 0,30 mm et dans lequel on utilise des éléments de résistance textiles, qui sont des cordes en polyamide 6.6 torsadées à partir d'au moins deux fils, **caractérisé en ce que**
le fil brut en polyamide 6.6 présente une résistance liée à la finesse, qui se situe dans une plage de 1,35 cN/dtex à 1,60 cN/dtex pour un allongement de 4 %,
la corde présente une résistance liée à la finesse, qui se situe dans une plage de 1,2 cN/dtex à 2 cN/dtex pour un allongement de 4 %, et
la corde présente un retrait à chaud à 177°C dans une plage de 4,0 % à 7,0 %,
dans lequel la résistance liée à la finesse est déterminée selon ASTM D885-16 et le retrait à chaud à 177°C est déterminé sous une précontrainte de 0,045 g/dtex et avec une durée d'exposition de deux minutes.

**2.** Procédé de fabrication d'une bande de caoutchouc en forme de bande, renforcée par des éléments de résistance, selon la revendication 1, **caractérisé en ce que** la corde présente une finesse de 300 à 4000 dtex.

**3.** Procédé de fabrication d'une bande de caoutchouc en forme de bande, renforcée par des éléments de résistance, selon l'une quelconque des revendications précédentes, **caractérisé en ce que** le facteur de torsion $\alpha$ de chaque fil à multi-filaments ou de la corde se situe dans une plage de 100 à 250, de préférence dans une plage de 120 à 180, dans lequel

$$\alpha = \text{torsion } [t/m] \cdot (\text{finesse}[tex]/1000)^{\frac{1}{2}}.$$

4.  Procédé de fabrication d'une bande de caoutchouc en forme de bande, renforcée par des éléments de résistance, selon une ou plusieurs des revendications précédentes, **caractérisé en ce que** le fil brut en polyamide 6.6 présente une résistance liée à la finesse, qui se situe dans une plage de 1,35 cN/dtex à 1,50 cN/dtex pour un allongement de 4 %.

5.  Procédé de fabrication d'une bande de caoutchouc en forme de bande, renforcée par des éléments de résistance, selon l'une quelconque des revendications précédentes, **caractérisé en ce que** le fil à multi-filaments présente un retrait à chaud à 177°C dans une plage de 5,0 % à 6,5 %.

6.  Procédé de fabrication d'une bande de caoutchouc en forme de bande, renforcée par des éléments de résistance, selon l'une quelconque des revendications précédentes, **caractérisé en ce que** la corde présente la construction x2 ou x3.

7.  Procédé de fabrication d'une bande de caoutchouc en forme de bande, renforcée par des éléments de résistance, selon la revendication 5, **caractérisé en ce que** l'élément de résistance est une corde composée de deux fils à multi-filaments torsadés l'un avec l'autre ayant chacun une finesse de fil de 1400 dtex et présente ainsi la construction 1400x2, **en ce que** la corde présente une résistance liée à la finesse, qui se situe dans une plage de 1,3 cN/dtex à 1,4 cN/dtex pour un allongement de 4 % et **en ce que** les cordes sont disposées dans la bande de préférence avec une densité de 80-120 epdm, de préférence avec une densité de 90 epdm, epdm signifiant fils par dm.

8.  Procédé de fabrication d'une bande de caoutchouc en forme de bande, renforcée par des éléments de résistance, selon la revendication 5, **caractérisé en ce que** l'élément de résistance est une corde composée de deux fils à multi-filaments torsadés l'un avec l'autre ayant chacun une finesse de fil de 470 dtex et présente ainsi la construction 470x2, **en ce que** la corde présente une résistance liée à la finesse, qui se situe dans une plage de 1,6 cN/dtex à 1,7 cN/dtex et **en ce que** les cordes sont disposées dans la bande avec une densité de 90 à 170, en particulier de préférence avec une densité d'environ 100 epdm, epdm signifiant fils par dm.

9.  Procédé de fabrication d'une bande de caoutchouc en forme de bande, renforcée par des éléments de résistance, selon la revendication 5, **caractérisé en ce que** l'élément de résistance est une corde composée de deux fils à multi-filaments torsadés l'un avec l'autre ayant chacun une finesse de fil de 350 dtex et présente ainsi une construction 350x2, **en ce que** la corde présente une résistance liée à la finesse, qui se situe à 1,9 cN/dtex pour un allongement de 4 % et **en ce que** les cordes sont disposées dans la bande avec une densité de 110 à 200 epdm, en particulier de préférence avec une densité de 110 à 130 epdm, epdm signifiant fils par dm.

10. Utilisation d'une bande de caoutchouc en forme de bande, renforcée par des éléments de résistance, fabriquée par un procédé selon une ou plusieurs des revendications 1 à 9, pour l'enroulement d'une bande de ceinture d'un pneumatique de véhicule.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014182265 A1
- US 3343363 A
- US 3849976 A
- US 4284117 A
- US 5115853 A